(19) Europäisches Patentamt / European Patent Office / Office européen des brevets

(11) **EP 4 246 763 B1**

(12) **EUROPEAN PATENT SPECIFICATION**

(45) Date of publication and mention
of the grant of the patent:
**18.12.2024 Bulletin 2024/51**

(21) Application number: **23159095.1**

(22) Date of filing: **28.02.2023**

(51) International Patent Classification (IPC):
*H02J 7/00* (2006.01)          *G06F 30/20* (2020.01)
*G06F 111/06* (2020.01)

(52) Cooperative Patent Classification (CPC):
**H02J 7/0013; H02J 7/0032; H02J 7/0048;**
G06F 30/20; G06F 30/373; G06F 2111/06;
Y02T 10/70

(54) **METHOD AND DEVICE FOR COMBINING CELL CORES, ELECTRONIC APPARATUS AND STORAGE MEDIUM**

VERFAHREN UND VORRICHTUNG ZUR KOMBINATION VON ZELLKERNEN, ELEKTRONISCHE VORRICHTUNG UND SPEICHERMEDIUM

PROCÉDÉ ET DISPOSITIF DE COMBINAISON DE COEURS DE CELLULE, APPAREIL ÉLECTRONIQUE ET SUPPORT D'INFORMATIONS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.03.2022 CN 202210264157**

(43) Date of publication of application:
**20.09.2023 Bulletin 2023/38**

(73) Proprietor: **Guangzhou Xiaopeng Motors Technology Co., Ltd.**
**Guangzhou (CN)**

(72) Inventor: **YU, Li**
**Guangzhou, Guangdong 510000 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(56) References cited:
**CN-A- 114 156 552**

• **ANANDA S ET AL: "A cell sorting Algorithm for series-parallel configured Lithium ion battery packs in spacecrafts", 2020 IEEE INTERNATIONAL CONFERENCE ON POWER ELECTRONICS, DRIVES AND ENERGY SYSTEMS (PEDES), IEEE, 16 December 2020 (2020-12-16), pages 1 - 5, XP033890886, DOI: 10.1109/PEDES49360.2020.9379500**

# Description

## Technical Field

The present disclosure relates to the technical field of battery capacity control, in particular to a method for combing cell cores, a device for combing cell cores, an electronic apparatus and a storage medium.

## Brief Description of the Related Art

Rapid development of electrically-operated cars and large scale energy storage leads to more and more requirements on capacity of a battery pack. In the prior art, high capacity of the battery pack is generally achieved by connecting several cell cores in series and in parallel to form the battery pack. There are two ways to increase the capacity of the battery pack. One of them is to increase the capacity of a single cell core, and the other is to optimize how to combine cell cores to increase the capacity of the battery pack. There are many ways to optimize the capacity of the cell core, but there are few optimization schemes for the combination of the cell cores. Due to the inconsistency among the cell cores, the capacity of the battery pack is usually lower than the capacity of any cell core in the battery pack, and thus the capacity of cell cores cannot be used normally, and the capacity of the battery pack is low. There is still room for optimization of effects of the traditional combination of cell cores.

Document "A cell sorting Algorithm for series-parallel configured Lithium ion battery packs in spacecrafts" by Anada S et al., 2020 IEEE INTERNATIONAL CONFERENCE ON POWER ELECTRONICS, DRIVES AND ENERGY SYSTEMS (PEDES), IEEE, 16 December 2020 (2020-12-16), pages 1-5, XP033890886, discloses cell sorting using the Genetic Algorithm (GA), involving mixed-integer linear optimization.

CN 114156552 A discloses an aging-considered equalization control strategy for series battery modules.

## Summary of the Disclosure

In view of the above issues, embodiments of the present disclosure provide a method for combing cell cores, a device for combing cell cores, an electronic apparatus and a storage medium that remove or at least partially alleviate the above issues.

In order to solve the above issues, a first aspect of the present disclosure provides a method for combining cell cores, the method including:

acquiring capacities and states of charge of N cell cores;
generating an initial battery pack population for the N cells according to different combinations of cell cores, the battery pack population comprising L members, each of the members comprising M battery packs, and each of the battery packs comprising P modules, each of the modules comprising K cell cores, N=M*P*K;
generating a new battery pack population iteratively using a genetic algorithm according to the following steps until a last generation battery pack population that meets a preset condition is obtained;
calculating minimum capacity of all of the members according to the capacity and state of charge of each of the cell cores in the battery pack population;
sorting the members on a basis of the minimum capacity of the members in the battery pack population and generating a new battery pack population according to sorting results; and
combining the cell cores into target modules and combining the target modules into a target battery pack according to combination of the cell cores of the target members in the last generation battery pack population.

A second aspect of the present disclosure also provides a device for combining cell cores, including:

an acquisition module configured to acquire capacities and states of charge of N cell cores;
a generation module configured to generate an initial battery pack population for N cell cores according to different combinations of cell cores, the battery pack population comprising L members, each of these members comprising M battery packs, each of these battery packs comprising P modules, and each of these modules comprising K cell cores, where N=M*P*K;
an iteration module configured to generate a new battery pack population iteratively using a genetic algorithm according to following steps until a last generation battery pack population meeting a preset condition is obtained;
a calculation module configured to calculate the minimum capacity of each member according to the capacity and state of charge of each of the cell cores in the battery pack population;
a sorting module configured to sort the members on a basis of the minimum capacity of each of the members in the battery pack population and generate a new battery pack population according to sorting results; and

a combining module configured to combine the cell cores into target modules and combine the target modules into a target battery pack according to the combination of the cell cores of target members in the last generation battery pack population.

A third aspect of the present disclosure also provides an electronic apparatus, including: a processor, a memory, and a computer program stored on the memory and capable of running on the processor, and configured to implement the method for combining cell cores as described above when it is executed by the processor.

A fourth aspect of the present disclosure also provides a computer-readable storage medium, on which a computer program is stored, and the computer program is configured to implement the method for combining cell cores as described above when it is executed by a processor.

The various embodiments of the present disclosure can at least achieve one of the following advantages:
In the embodiment of the present disclosure, an initial battery pack population is generated for N cell cores according to different combinations of cell cores. The genetic algorithm is used to iteratively generate a new battery pack population based on the following steps until the last generation battery pack population which meets the preset condition is obtained. The minimum capacity of each member is calculated on a basis of the capacity and state of charge of each of cell cores in the battery pack population. The members are sorted according to the minimum capacity of these members in the battery pack population, and a new battery pack population is generated according to the sorting results. Depending on the combination of cell cores of the target members in the last generation battery pack population, the cell cores can be combined into target modules and the target modules are combined into a target battery pack. The embodiment of the present disclosure is based on a genetic algorithm. It can generate a new battery pack population according to the sorting result of the members depending on minimum capacity of these members of the previous battery pack population. In this way, a variety of battery pack combinations in different sorting ways can be generated, so as to improve the combination efficiency in comparison with traditional combination of cell cores. The inconsistency between the capacities of adjacent monomer batteries can be reduced by such sorting operation according to the minimum capacity so that the combination of the cell cores can be optimized. Generation of the battery pack according to the combination of the cell cores of target members in the last generation battery pack population can increase the usage count and capacity of the battery pack.

**Brief Description of the Drawings:**

FIG. 1 is a flow chart showing steps of a method for combining cell cores according to an embodiment of the present disclosure;

FIG. 2 is a flow chart showing steps of a method for combining cell cores according to another embodiment of the present disclosure;

FIG. 3 shows capacity $C_u$ and $SOC_u$ values of a plurality of cell cores according to an embodiment of the present disclosure;

FIG. 4 shows results sorting a plurality of members in a battery pack population according to an embodiment of the present disclosure;

FIG. 5 is a flow chart of an iterative loop for an embodiment of the present disclosure;

FIG. 6 shows capacity values of multiple battery packs and modules thereof in target members according to the embodiment of the present disclosure;

FIG. 7 shows a cell core combination of multiple battery packs of target members in the last generation battery pack population according to an embodiment of the present disclosure;

FIG. 8 is a graph showing the minimum capacity of battery packs of the second generation reserved member according to an embodiment of the present disclosure;

FIG. 9 is a graph showing the minimum capacity of battery packs of the 100th generation reserved member according to an embodiment of the present disclosure;

FIG. 10 is a graph showing the minimum capacity of battery packs of the 2000th generation reserved member according to an embodiment of the present disclosure;

FIG. 11 is a graph showing the minimum capacity target values of battery packs of target members of each generation according to an embodiment of the present disclosure;

FIG. 12 is a structural block diagram of a device for combining cell cores according to an embodiment of the present disclosure.

**Detailed Description of the Preferred Embodiment**

In order to make the above objects, features and advantages of the present disclosure more comprehensible, the present disclosure will be further described in detail below in conjunction with the accompanying drawings and specific embodiments.

At the current level of battery technology, several cell cores are generally connected in series and in parallel to form a battery pack to achieve higher capacity. The way to increase the capacity of the battery pack is mainly by increasing the capacity of single cell cores, but rarely involves optimizing the combination of cell cores. Due to the inconsistency among the cell cores, the capacity of the battery pack is usually smaller than that of any one of the cell cores in the battery pack, thereby the individual cell cores fail to function normally and the capacity of the battery pack becomes low. Therefore, it is significantly important to optimize the combination of the cell cores.

One of core concepts of the embodiments of the present disclosure is to propose a method for optimizing the combination of existing cell cores. The method uses genetic algorithm as the basis, and realizes automatic computer optimization of the combination of cell cores through computer programming.

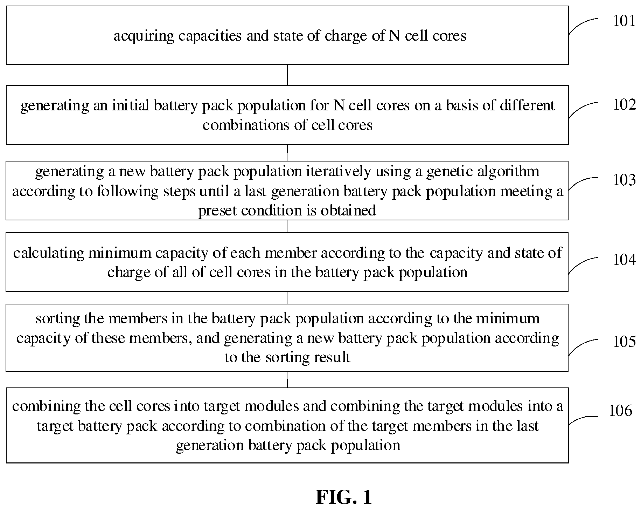

As shown in FIG. 1, it is provided a flow chart showing steps of a method for combining cell cores according to an embodiment of the present disclosure. The method may specifically include following Steps 101 to 106:

At Step 101: capacities and states of charge of N cell cores are acquired.

The embodiment of the present disclosure is aimed at the field of new energy vehicles. Those skilled in the art should understand that the capacity of the cell cores can be obtained through the charge and discharge test. The state of charge (SOC) of the cell cores may be determined from time integration calculation in the charge and discharge test, and it can also be obtained by the open circuit voltage of the electric cell obtained from the tests after the conversion of the SOC-OCV (State of charge-open circuit voltage) characteristic curve of the electric cell.

The cell cores are elements that constitute a module and the module is an element that constitutes the battery pack. Thus, several cell cores may be connected in series, in parallel or in series and parallel to form a module as required, and several modules may be connected in series or in parallel or in series and parallel to form a battery pack. The capacity of the module is determined by the number of the cell cores and the way of connection among the cell cores, and the capacity of the battery pack is determined by the number of the modules and the way of connection among the modules.

At Step 102: an initial battery pack population for N cell cores is generated on a basis of different combinations of cell cores. The battery pack population includes L members, and each of the members includes M battery packs. Each of the battery packs includes P modules. Each of the modules includes K cell cores, where $N=M*P*K$.

Those skilled in the art should understand that the battery cells can be combined in such a way that the cell cores can be combined in batches into several modules at first, then these modules can be combined into several battery packs, and several battery packs separated from each other can be combined to form a list of the initial battery pack populations. Serial numbers can be assigned to all of cell cores respectively, and the capacities and states of charge of the corresponding cell cores can be looked up through the serial numbers.

It should be noted that the modules and battery packs in the embodiments of the present disclosure mean energy storage devices with greater energy formed by connection of several cell cores of the same specification in series or in parallel. They are applicable for lithium-ion batteries, lithium metal batteries, lead-acid batteries, Ni-MH batteries, semi-solid or solid-state batteries and the like.

As an example, the battery pack population is composed of L members. The L members are independent of each other. Each of the members is a set of battery packs which includes M battery packs. Each of the battery packs includes P modules. Each of the modules includes K cell cores, so the number N of cell cores is equal to the product (i.e. result of multiplication) of M, P, and K. It should be noted that N, M, P, K and L are all positive integers in the embodiments of the present disclosure. In the present disclosure, assigning the serial numbers to the cell cores and combining the cell cores on the basis of the serial numbers are both simulated by a programming language or a program. Thus, the combination of the cell cores in this application is random. The specific composition steps of the battery pack are known to those skilled in the art and will be omitted here.

At Step 103: a new battery pack population is iteratively generated by using a genetic algorithm according to the following steps until a last generation battery pack population meeting a preset condition is obtained.

The genetic algorithm in the present disclosure is a method for searching the optimal solution by simulating the natural evolution process. The algorithm converts the problem-solving process into a process similar to such as the crossover and mutation of chromosome genes in biological evolution by using computer simulation operations in a mathematical way. When solving more complicated combinatorial optimization problems, it can usually obtain better optimization results faster than some conventional optimization algorithms. The genetic algorithm has been widely used in the fields of combinatorial optimization, machine learning, signal processing, adaptive control and artificial life and so on.

As an example, the genetic algorithm in the embodiment of the present disclosure can be the command stream and macro file that comes with the programming language or data processing software, and realize the programmed cyclic iteration process of automatic combination-calculation-optimization through programs to obtain the required final target members.

At Step 104: the minimum capacity of each member is calculated according to the capacities and state of charge of all of cell cores in the battery pack population.

As an example, each of the members can include M battery packs. Each of the battery packs can include P modules, and each of the modules can include K batteries. The calculation of the minimum capacity of each of the members can be converted to the calculation of the minimum capacity of the battery packs in each of the members. As such, the calculation of the minimum capacity of each battery pack can be converted into the calculation of the minimum capacity of the modules in the battery pack, and the calculation of the minimum capacity of each module can be converted into the calculation of the minimum capacity of the cell cores.

At Step 105: the members in the battery pack population are sorted according to the minimum capacity of these members, and a new battery pack population is generated according to the sorting result.

Due to differences in manufacturing processes and application conditions, there will be inconsistencies in voltage, SOC, capacity, internal resistance, self-discharge rate and other characteristics among monomer batteries. This inconsistency will increase with usage count, so as to accelerate battery aging and performance attenuation. To this end, the embodiments of the present disclosure can reduce the inconsistency of capacity between adjacent monomer batteries by sorting, thereby increasing the usage count and capacity of the battery pack.

At Step 106: the cell cores are combined into target modules and the target modules are combined into a target battery pack, according to combination of the cell cores of the target members.

According to the principle of genetic algorithm, Step 104 and Step 105 can be executed cyclically until the last generation battery pack population meeting the preset condition is obtained.

It should be noted that in the embodiment of the present disclosure, the target members obtained when the number of iterations reaches a predetermined number can be determined as the last generation battery pack population that meets the preset condition. For example, the number of iterations is set to 1500, and when the number of iterations reaches 1500, end the cycle and acquire the optimal member of the battery pack population in the current cycle step as the target member. The present disclosure can also determine the battery pack population of which minimum capacity value of the sorted first member reaches the target capacity threshold as the last generation battery pack population meeting the preset condition. For example, assuming that the target capacity threshold is set to 123.50Ah, when the minimum capacity of the sorted first member in the battery pack population reaches 123.50Ah, the battery pack population at this time is the last generation battery pack population.

The method for combining cell cores according to the embodiment of the present disclosure can generate an initial battery pack population for N cell cores depending on different combinations of cell cores. The genetic algorithm is used to iteratively generate a new battery pack population based on the following steps until the last generation battery pack population which meets the preset condition is achieved. The minimum capacity of each member is calculated on a basis of the capacity and state of charge of each of cell cores in the battery pack population. The members are sorted according to the minimum capacity of these members in the battery pack population, and a new battery pack population is generated according to the sorting results. Depending on the combination of cell cores of the target members in the last generation battery pack population, the cell cores can be combined into target modules and the target modules are combined into a target battery pack. The embodiment of the present disclosure is based on a genetic algorithm. It can generate a new battery pack population according to the sorting result of the members depending on minimum capacity of these members of the previous battery pack population. In this way, a variety of battery pack combinations in different sorting ways can be generated, so as to improve the combination efficiency in comparison with traditional cell cores. The inconsistency between the capacities of adjacent monomer batteries can be reduced by such sorting operation according to the minimum capacity so that the combination of the cell cores can be optimized. Generation of the battery pack from the combination of the cell cores of target members in the last generation battery pack population can increase the usage count and capacity of the battery pack.

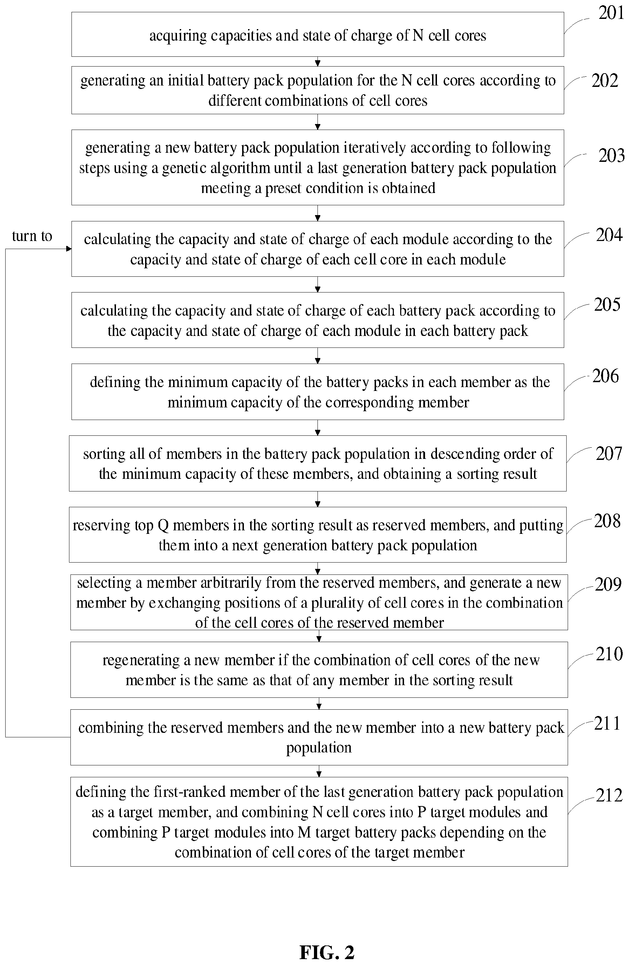

Referring to FIG. 2, it shows a flow chart of a method for combining cell cores according to another embodiment of the present disclosure. The method may specifically include following steps 201-212.

At Step 201: the capacities and states of charge of N cell cores are acquired.

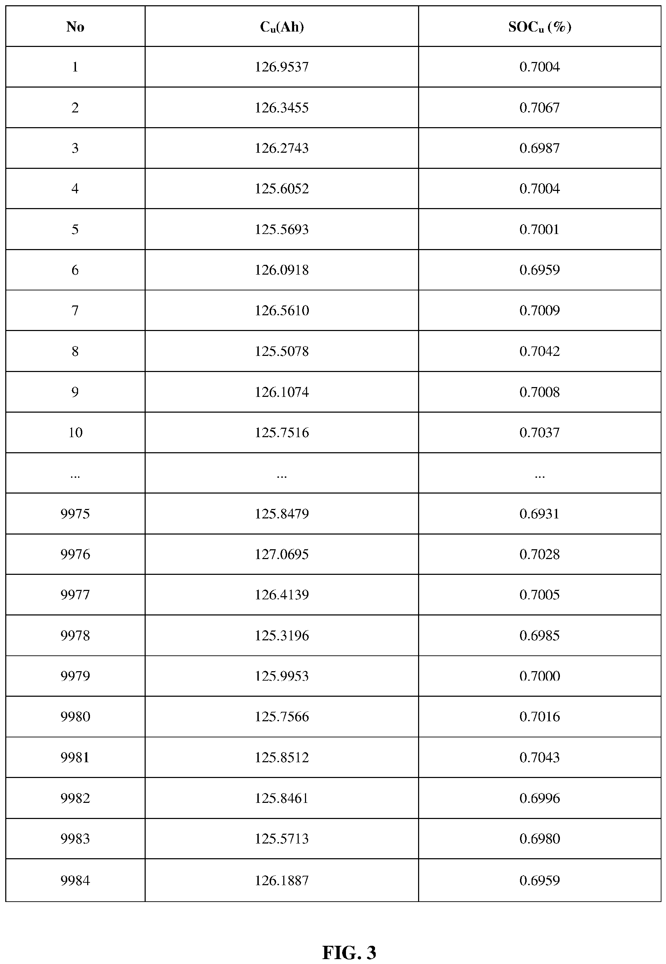

As an example, the capacity of cell cores can be normally distributed, with a mean of 126Ah and a standard deviation of 0.40Ah. The SOC of cell cores can be normally distributed, with a mean of 70% and a standard deviation of 0.003%. The values of capacity $C_u$ and $SOC_u$ of 9984 cell cores can be obtained as shown in FIG.3. In FIG.3, No represents the serial number of the cell cores, $C_u$ (Ah) represents the capacity of the cell cores, and $SOC_u$ represents the state of charge of the cell cores. FIG. 3 contains the capacities and states of charge of the 1st to 9984th cell cores.

It should be noted that the number N of cell cores in the embodiment of the present disclosure can be obtained as a positive integer according to the number of battery packs to be formed. The specific number of cell cores to be obtained is not limited herein.

At Step 202: an initial battery pack population for the N cell cores is generated according to different combinations of cell cores.

As an example, according to different combinations of cell cores, the cell cores can be connected in series to form modules, and then the modules can be connected in series to form a battery pack. Assuming that 52 battery packs in total need to be produced and one battery pack is composed of 16 modules and one module is composed of 12 cell cores, then the production of the 52 battery packs requires 832 modules and 9984 cell cores in total. If the population size is 80, the initial battery pack population will contain 80 members, and each of these members will contain 52 battery packs different from other members.

It should be noted that the disclosed embodiments of the present disclosure are not limited thereto, for example, in the embodiments of the present disclosure, the connections of cell cores, the population size, the number of battery packs included in each member, the number of modules included in each battery pack, and the number of cell cores contained in each module can be provided as required.

At Step 203: a new battery pack population is generated iteratively according to the following steps using a genetic algorithm until a last generation battery pack population meeting the preset condition is obtained.

At Step 204: the capacity and state of charge of each module are calculated according to the capacity and state of charge of each cell core in each module.

At Step 205: the capacity and state of charge of each battery pack are calculated according to the capacity and state of charge of each module in each battery pack .

At Step 206: the minimum capacity of the battery packs in each member is defined as the minimum capacity of the corresponding member.

In an example, the capacity of each module and battery pack can be calculated by the following Equation (1):

$$C_0 = \min(SOC * C) + \min((1 - SOC) * C) \qquad \text{Equation (1)}$$

The state of charge of each module and battery pack can be calculated by the following Equation (2):

$$\mathrm{SOC}_0 = \min(\boldsymbol{SOC}) \qquad \text{Equation (2)}$$

The minimum capacity corresponding to each member is calculated by the following Equation (3):

$$\mathrm{C}_{\mathrm{min}} = \min(\boldsymbol{C_p}) \qquad \text{Equation (3)}$$

In the above Equation (1) - Equation (3), $C_0$ is the capacity of the module or battery pack, SOC is a vector composed of the state of charge of all the monomers that make up the modules or battery packs, and C is a vector composed of the capacity of all the monomers that make up the module or battery pack. The operator *min()* means to take the minimum value of the elements in the vector, and the operator * means to multiply the elements of one vector by the corresponding elements of the other vector respectively. When the C. and $SOC_m$ of the module are calculated, $C_m = C_0$, SOC. = $SOC_0$, and the monomers refer to the cell cores that make up the module. When the $C_p$ and $SOC_p$ of the battery pack are calculated, $C_p = C_0$, $SOC_p = SOC_0$, and the monomers refer to the modules that make up the battery pack. $C_{min}$ is a target value function of the combination of cell cores.

At Step 207: all of members in the battery pack population are sorted in descending order of the minimum capacity of these members, and the sorting result is obtained.

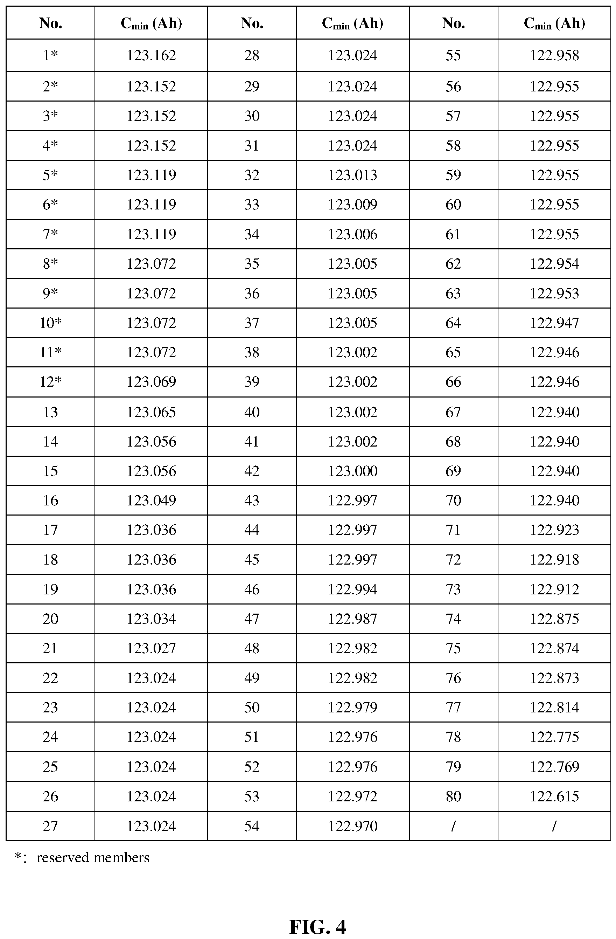

As an example, the minimum capacity of the battery pack can be calculated one by one for all of members in the initial battery pack population through the program code to obtain the minimum capacity of each member, and these members are sorted in descending order of the minimum capacity. The sorting results of all of members based on the minimum capacity are shown in FIG. 4.

In FIG.4, No represents the serial number of each member, $C_{min}$ represents the minimum capacity of each member, and FIG. 4 contains the results of sorting 80 members in descending order of the minimum capacity.

At Step 208: top Q members in the sorting result are reserved as reserved members, and are put into the next generation battery pack population.

In the embodiment of the present disclosure, the magnitude of Q is the product (i.e. result of multiplication) of the number of members in the sorting result and a candidate ratio, and it is a positive integer. The candidate ratio refers to the ratio of reserved members to the total members in the sorting result. For example, the candidate ratio in the optimization parameter can be set as 0.15, then the magnitude of the reserved members is 80*0.15=12. In FIG.4, 1*-12* represents 12 reserved members. The top 12 members in the candidate result are regarded as reserved members, and the rest 68 members are directly eliminated. However, the embodiment of the present disclosure is not limited thereto, and the candidate ratio Re in the embodiment of the present disclosure can be set as required, and may be a decimal between 0 to 1.

At Step 209: a member is arbitrarily selected from the reserved members, and a new member is generated by exchanging positions of a plurality of cell cores in the combination of the cell cores of the reserved member.

For example, one member can be randomly selected from the 12 reserved members and the variation intensity in the optimization parameter becomes 250, then the number of cell cores that need to be replaced is 250*2=500, and positions of 500 cell cores in combination of the reserved members are exchanged with each other to generate 68 eliminated members. However, the embodiments of the present disclosure are not limited thereto, and the variation intensity in the embodiment of the present disclosure can be set as required in practice, and can be a positive integer.

At Step 210: a new member is regenerated if the combination of cell cores of the new member is the same as that of any member in the sorting result.

At Step 211: the reserved members and the new member are combined into a new battery pack population.

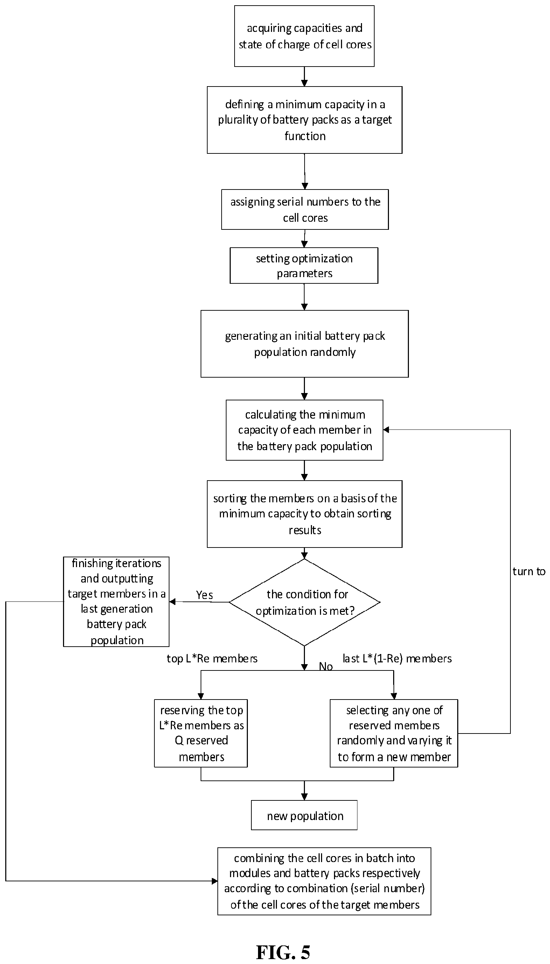

As an example, the newly generated 68 members and 12 reserved members can be combined into a new battery pack population. The above Step 204 to Step 211 are repeatedly executed until the count of iterations reaches 2000. The flow chart of the iterative loop in the embodiment of the present disclosure is shown in FIG. 5.

It should be noted that L in FIG. 5 is the number of members of battery pack population, Re is the candidate ratio, Q is the number of the reserved members in the battery pack population, Q=L*Re.

At Step 212: the first-ranked member of the last generation battery pack population is defined as the target member, and N cell cores are combined into P target modules and P target modules are combined into M target battery pack depending on the combination of cell cores of the target member.

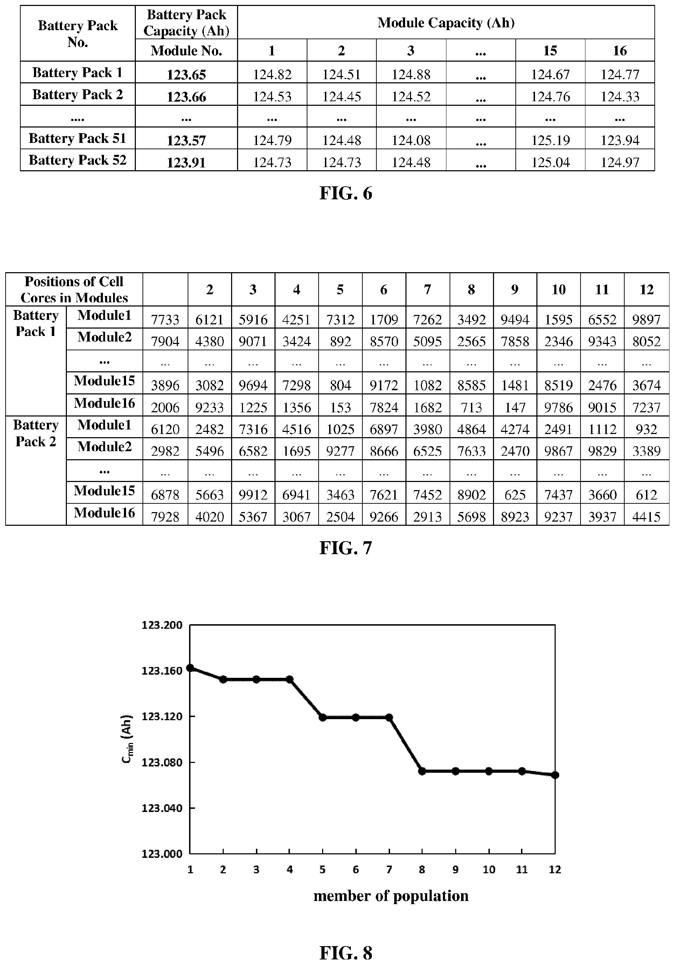

As an example, the count of iterations can be set to 2000, and when the count of iterations reaches 2000, the iteration is stopped, and the first-ranked member in descending order of the smallest capacity of members in the last generation population list is the target member. FIG. 6 shows 52 battery packs and their module capacity values in the target members of the last generation battery pack population table. FIG. 6 contains 52 battery packs in the target members, and each battery pack consists of 16 different modules. The capacity of each battery pack and the capacity of the modules in each battery pack can be obtained according to the serial number of the battery packs.

According to the serial numbers of cell cores in the target members of the last generation battery pack population table, these 9984 cell cores are packaged into modules and battery packs in sequence. FIG. 7 shows the combination of cell cores in the two battery packs of the target members of the last generation battery pack population table. The battery pack in FIG. 7 consists of 16 different modules, and each module consists of 12 different cell cores. After such combination, the serial numbers of the cell cores contained in each battery pack are different.

The method for combining cell cores according to the embodiment of the present disclosure can generate an initial battery pack population for N cell cores depending on different combinations of cell cores. The genetic algorithm is used to iteratively generate a new battery pack population based on the following steps until the last generation battery pack population which meets the preset condition is achieved. The minimum capacity of each member is calculated on a basis of the capacity and state of charge of each of cell cores in the battery pack population. The members are sorted according to the minimum capacity of these members in the battery pack population, and a new battery pack population is generated according to the sorting results. Depending on the combination of cell cores of the target members in the last generation battery pack population, the cell cores can be combined into target modules and the target modules are combined into a target battery pack. The embodiment of the present disclosure is based on a genetic algorithm. It can generate a new battery pack population according to the sorting result of the members depending on minimum capacity of these members of the previous battery pack population. In this way, a variety of battery pack combinations in different sorting ways can be generated, so as to improve the combination efficiency in comparison with traditional cell cores. The inconsistency between the capacities of adjacent monomer batteries can be reduced by such sorting operation according to the minimum capacity so that the combination of the cell cores can be optimized. Generation of the battery pack according to the combination of the cell cores of target members in the last generation battery pack population can increase the usage count and capacity of the battery pack.

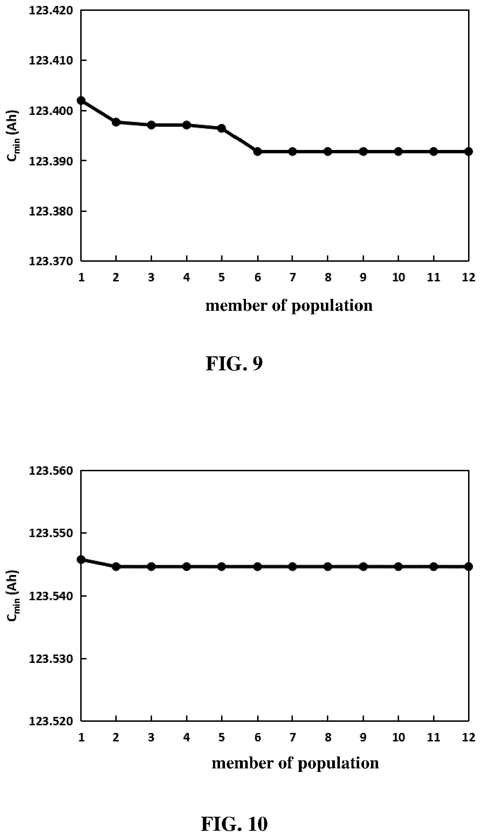

The optimization process of this embodiment is a simple calculation example for testing. The total number of cell cores is 9984. The total number of battery packs is 52. The population size is 80, and the count of iterations is 2000. The combination of cell cores that increases the capacity of the battery pack is obtained. FIG. 8 shows the minimum capacity diagram of the battery packs of the second generation reserved members of the embodiment of the present disclosure, where the horizontal coordinate represents the serial number of the reserved members, and the vertical coordinate represents the cell capacity of the members. It can be obtained from FIG. 8 that the capacity of cell cores of the first-ranked member in the second generation reserved members is close to 123.160Ah. FIG. 9 shows the minimum capacity diagram of the battery packs of the 100th generation reserved members of the embodiment of the present disclosure. It can be obtained from FIG. 9 that the capacity of cell cores of the first-ranked member in the 100th generation reserved members is greater than 123.400Ah. FIG. 10 shows the minimum capacity diagram of the battery packs of the 2000th generation reserved members of the embodiment of the present disclosure. It can be obtained from FIG. 10 that the capacity of cell cores of the first-ranked member in the 2000th generation reserved members is greater than 123.540Ah.

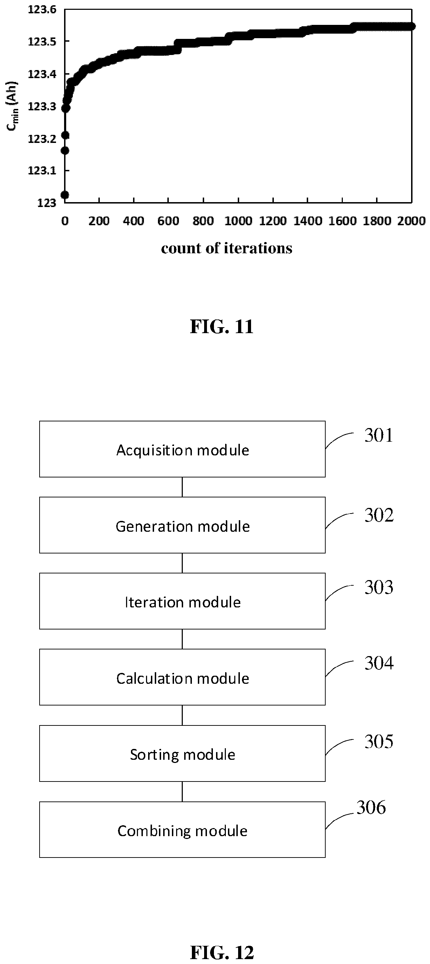

FIG. 11 shows the minimum capacity target values of battery packs of each generation target member. In FIG. 11, the horizontal coordinate represents the count of iterations, and the vertical coordinate represents the minimum capacity value of each generation target member. It can be determined from FIG. 11 that the minimum capacity value of the 2000th generation target members is the highest. From the first generation to the last generation, the minimum capacity value of the 52 battery packs increases from 123.02Ah to 123.55Ah, that is, it increases by 0.53Ah. If the cell cores are combined into a battery pack by random combination, a battery pack with a capacity of 122.6Ah may be achieved (as shown in FIG. 4-No.80). In contrast, through such optimization by this method, the minimum capacity of the 52 battery packs is 123.55Ah, completely avoiding the battery packs below 123Ah.

It should be noted that, for the sake of brief, the embodiments of the method are expressed as a series of action combinations, but those skilled in the art should know that the embodiments of the present disclosure are not limited by the described action sequences. According to the embodiment of the present disclosure, certain steps may be performed in other orders or simultaneously. Secondly, those skilled in the art should also know that the embodiments described in the specification belong to preferred embodiments, and the actions involved are not necessarily required by the embodiments of the present disclosure.

However, the invention is defined by the features of the independent claims 1 and 9. Preferred embodiments are defined in the dependent claims.

Referring to FIG. 12, it shows a structural block diagram of a device for combining cell cores according to an embodiment of the present disclosure, which may specifically include following modules:
an acquisition module 301, a generation module 302, an iteration module 303, a calculation module 304, a sorting module 305 and a combining module 306.

The acquisition module 301 is configured to acquire the capacities and states of charge of N cell cores.

The generation module 302 is configured to generate an initial battery pack population for N cell cores according to different combinations of cell cores. The battery pack population includes L members, and each of these members includes M battery packs, and each of these battery packs includes P modules. Each of these modules includes K cell cores, where N=M*P*K.

The iteration module 303 is configured to use the genetic algorithm to iteratively generate a new battery pack population according to the following steps until the last generation battery pack population meeting the preset condition is obtained.

The calculation module 304 is configured to calculate the minimum capacity of each member according to the capacity and state of charge of each of the cell cores in the battery pack population.

In an embodiment of the present disclosure, the calculation module 304 may include following sub-modules:

a first calculation sub-module configured to calculate the capacity and state of charge of each module according to the capacity and state of charge of each of the cell cores in each module;
a second calculation sub-module configured to calculate the capacity and state of charge of each battery pack according to the capacity and state of charge of each module in each battery pack; and
a third calculation sub-module configured to use the minimum capacity of the battery packs in each member as the minimum capacity corresponding to each member.

The sorting module 305 is configured to sort the members in the battery pack population according to the minimum capacity of each member in the battery pack population, and generate a new battery pack population according to the sorting result.

In an embodiment of the present disclosure, the sorting module 305 may include following sub-modules:

a sorting sub-module configured to sort the members in the battery pack population in descending order of the minimum capacity of these members, and obtain the sorting result;
a reserving sub-module configured to use the top Q members in the sorting result as reserved members to be reserved to the next generation battery pack population;
a new member generation sub-module configured to generate new members; and
a battery pack population combination sub-module configured to combine the reserved members and new members into a new battery pack population.

In an embodiment of the present disclosure, the new member generation sub-module may include a following sub-unit:
a new member generation unit configured to randomly select a member from the reserved members, and generate a new member by exchanging positions of multiple cell cores in the combination of the cell cores of the reserved member.

In an embodiment of the present disclosure, the sorting module may also include a following sub-module:
a regeneration sub-module configured to regenerate a new member if the combination of the cell cores of the new member is the same as that of any member in the sorting result.

The combining module 306 is configured to combine the cell cores into target modules and combine the target modules into a target battery pack according to the combination of the cell cores of target members in the last generation battery pack population.

In an embodiment of the present disclosure, the combining module may include following sub-modules:

a target member determination sub-module configured to set the first-ranked member in the last generation battery pack population as the target member; and
a target battery pack determination module configured to combine N cell cores into P target modules and combine the P target modules into M target battery packs according to the combination of the cell cores of target members.

In an embodiment of the present disclosure, the device for combining cell cores may further include a following module:
a first determining module configured to determine the battery pack population obtained in a case that the count of iterations reaches a predetermined number as the last generation battery pack population meeting preset condition.

In an embodiment of the present disclosure, the device for combining cell cores may further include a following module:
a second determination module configured to determine the battery pack population whose minimum capacity value of the first-ranked member obtained by iteration reaches the target capacity threshold as the last generation battery pack population meeting the preset condition.

The method for combining cell cores according to the embodiment of the present disclosure can generate an initial battery pack population for N cell cores depending on different combinations of cell cores. The genetic algorithm is used to iteratively generate a new battery pack population based on the following steps until the last generation battery pack population which meets the preset condition is achieved. The minimum capacity of each member is calculated on a basis of the capacity and state of charge of each of cell cores in the battery pack population. The members are sorted according to the minimum capacity of these members in the battery pack population, and a new battery pack population is generated according to the sorting results. Depending on the combination of cell cores of the target members in the last generation battery pack population, the cell cores can be combined into target modules and the target modules are combined into a target battery pack. The embodiment of the present disclosure is based on a genetic algorithm. It can generate a new battery pack population according to the sorting result of the members depending on minimum capacity of these members of the previous battery pack population. In this way, a variety of battery pack combinations in different sorting ways can be generated, so as to improve the combination efficiency in comparison with traditional combination of cell cores. The inconsistency between the capacities of adjacent monomer batteries can be reduced by such sorting operation according to the minimum capacity so that the combination of the cell cores can be optimized. Generation of the battery pack according to the combination of the cell cores of target members in the last generation battery pack population can increase the usage count and capacity of the battery pack.

The embodiments for the device according to the present disclosure will be described herein briefly since they are basically similar to the embodiments for the method according to the present disclosure. For the specific parts of the device associated with the method according to the present disclosure, it may refer to those of the description of the corresponding embodiments for the method.

An embodiment of the present disclosure also provides an electronic apparatus, including:
a processor, a memory, and a computer program stored on the memory and capable of running on the processor. When the computer program is executed by the processor, it realizes the various processes in the above embodiments of the method for combining cell cores, and can achieve the same technical effects. In order to avoid repetition, the details will be omitted herein.

An embodiment of the present disclosure also provides a computer-readable storage medium, on which a computer program is stored, and when the computer program is executed by a processor, each process of the above-mentioned embodiments of the method for combining cell cores is realized, and can achieve the same technical effects. In order to avoid repetition, the details will be omitted herein.

The embodiments in this description are described in a progressive manner. Each embodiment focuses on the difference from other embodiments, and the same and similar parts of the embodiments can be referred to each other.

Those skilled in the art should understand that the embodiments of the present disclosure may be provided as methods, devices, or computer program products. Accordingly, embodiments of the present disclosure may take the form of an entirely hardware, an entirely software, or an combination of software and hardware. Furthermore, embodiments of the present disclosure may take the form of a computer program product embodied on one or more computer-usable storage media (including but not limited to magnetic disk storage, CD-ROM, optical storage, etc.) having computer-usable program code embodied therein.

Embodiments of the disclosure are described with reference to flowchart illustrations and/or block diagrams of methods, terminal apparatuses (systems), and computer program products according to embodiments of the disclosure. It should be understood that each procedure and/or block in the flowchart and/or block diagram, and combinations of procedures and/or blocks in the flowchart and/or block diagram can be implemented by computer program instructions. These computer program instructions may be provided to a general purpose computer, special purpose computer, embedded processor or processor of other programmable data processing terminal apparatus to produce a machine such that instructions executed by the computer or processor of other programmable data processing terminal apparatus can produce means for achieving the functions specified in one or more procedures of the flowchart and/or one or more blocks of the block diagram.

These computer program instructions may also be stored in a computer-readable memory capable of directing a computer or other programmable data processing terminal equipment to operate in a specific manner, such that the instructions stored in the computer-readable memory produce a manufacturing article including instruction means. The instruction means implement the functions specified in one or more procedures of the flowchart and/or one or more blocks of the block diagram.

These computer program instructions can also be loaded into a computer or other programmable data processing terminal apparatuses, so that a series of operational steps are implemented on the computer or other programmable terminal apparatuses to produce computer-implemented processing, thereby the instructions executed above can provide steps for implementing the functions specified in the procedure or procedures of the flowchart and/or one or more blocks of the block diagram.

Although the preferred embodiments of embodiments of the present disclosure have been described, additional changes and modifications can be made to these embodiments by those skilled in the art once the basic inventive concept is appreciated. Therefore, the appended claims are intended to be interpreted to cover the preferred embodiment and all changes and modifications which fall within the scope of the present disclosure.

An embodiment not claimed, of the present disclosure also provides a battery pack, wherein said battery pack is obtained by any one of methods disclosed above for combining cell cores.

Finally, it should also be noted that in this text, relational terms such as first and second etc. are only used to distinguish one entity or operation from others, and do not necessarily require or imply that these entities or operations, any such actual relationship or order exists. Furthermore, the term "comprises", "contains" or any other variation thereof is intended to cover a non-exclusive inclusion such that a process, a method, an article, or a terminal equipment including a set of elements includes not only those elements, but also includes other elements not expressly listed, or also includes inherent elements in such process, method, article, or terminal equipment. Without further limitations, an element defined by the phrase "comprising a ..." does not exclude the presence of additional identical elements in the process, method, article or terminal equipment comprising said element.

The method and device for combining cell cores, electronic apparatuses and storage media provided by the present disclosure have been explained above in detail. In this text, specific examples are used to illustrate the principle and implementation of the present disclosure. The description of the above embodiments is only used to help to understand the method of the present disclosure and its core concept. On the other hand, for those of ordinary skill in the art, there will be changes in the specific implementation and scope of application without departing from the concept of the present disclosure. In summary, the content of the description should not be construed as limiting the present disclosure. The invention is defined by the features of the independent claims 1 and 9. Preferred embodiments are defined in the dependent claims.

## Claims

1.  A method for combining cell cores, the method comprises:

    acquiring (101) capacities and states of charge of N cell cores; and
    generating (102) an initial battery pack population for the N cell cores according to different combinations of cell cores, the battery pack population comprising L members, each of the members comprising M battery packs, and each of the battery packs comprising P modules, each of the modules comprising K cell cores, N=M*P*K;
    **characterized in that** the method further comprises:

    generating (103) a new battery pack population iteratively using a genetic algorithm according to following steps until a last generation battery pack population that meets a preset condition is obtained;
    calculating (104) minimum capacity of all of the members according to the capacity and state of charge of each of the cell cores in the battery pack population;

sorting (105) the members on a basis of the minimum capacity of the members in the battery pack population and generating a new battery pack population according to sorting results; and

combining (106) the cell cores into target modules and combining the target modules into a target battery pack according to combination of the cell cores of the target members in the last generation battery pack population.

2. The method according to claim 1, **characterized in that** said calculating (104) minimum capacity of all of the members according to the capacity and state of charge of each of the cell cores in the battery pack population comprises:

calculating (204) the capacity and state of charge of each of the modules according to the capacity and state of charge of each of cell cores in each of the modules;

calculating (205) the capacity and state of charge of each battery pack according to the capacity and state of charge of each of the modules in each battery pack; and

defining (206) the minimum capacity of the battery pack in each of the members as the minimum capacity of the corresponding member.

3. The method according to claim 2, **characterized in that** said sorting (105) the members on a basis of the minimum capacity of the members in the battery pack population and generating a new battery pack population according to sorting results comprises:

sorting (207) all of members in the battery pack population in descending order of the minimum capacity of the members to obtain the sorting result;

reserving (208) top Q members in the sorting results as reserved members and putting the reserved members into a next generation battery pack population;

generating new members; and

combining (211) the reserved members and the new members into a new battery pack population.

4. The method according to claim 3, **characterized in that** said generating new members comprises:
selecting (209) a member arbitrarily from the reserved members and generating the new members by exchanging positions of a plurality of cell cores in the combination of cell cores of the reserved members.

5. The method according to claim 4, **characterized in that** said sorting (105) the members on a basis of the minimum capacity of the members in the battery pack population and generating a new battery pack population according to sorting results further comprises:
regenerating (210) new members if the combination of the cell cores of the new members is same as that of any member in the sorting results.

6. The method according to claim 1, **characterized in that** said combining (106) the cell cores into target modules and combining the target modules into a target battery pack according to combination of the cell cores of the target members in the last generation battery pack population comprises:

selecting (212) the first-ranked member in the last generation battery pack population as the target member; and

combining the N cell cores into P target modules and combining the P target modules into M target battery packs according to the combination of cell cores of the target member.

7. The method according to claim 1, **characterized in that** the method further comprises:
determining the battery pack population that is obtained in a case that count of iterations reaches a predetermined number as the last generation battery pack population that meets the preset condition.

8. The method according to claim 1, **characterized in that** the method further comprises:
determining the battery pack population in which the minimum capacity value of the first-ranked member obtained by iteration reaches a target capacity threshold as the last generation battery pack population that meets the preset condition.

9. A device for combining cell cores, comprising:

an acquisition module (301) configured to acquire capacities and states of charge of N cell cores; and
a generation module (302) configured to generate an initial battery pack population for N cell cores according to different combinations of cell cores, the battery pack population comprising L members, each of these members comprising M battery packs, each of these battery packs comprising P modules, and each of the modules comprising K cell cores, where N=M*P*K;
**characterized in that** the device further comprises:

an iteration module (303) configured to generate a new battery pack population iteratively using a genetic algorithm according to following steps until a last generation battery pack population meeting a preset condition is obtained;
a calculation module (304) configured to calculate the minimum capacity of each member according to the capacity and state of charge of each of the cell cores in the battery pack population;
a sorting module (305) configured to sort the members on a basis of the minimum capacity of each of the members in the battery pack population and generate a new battery pack population according to sorting results; and
a combining module (306) configured to combine the cell cores into target modules and combine the target modules into a target battery pack according to the combination of the cell cores of target members in the last generation battery pack population.

10. The device for combining cell cores according to claim 9, **characterized in that**:
the calculation module (304) comprises:

a first calculation sub-module configured to calculate the capacity and state of charge of each module according to the capacity and state of charge of each of the cell cores in each module;
a second calculation sub-module configured to calculate the capacity and state of charge of each battery pack according to the capacity and state of charge of each module in each battery pack; and
a third calculation sub-module configured to use the minimum capacity of the battery packs in each member as the minimum capacity corresponding to each member, and
wherein the sorting module (305) is configured to sort the members in the battery pack population according to the minimum capacity of each member in the battery pack population, and generate a new battery pack population according to the sorting result.

11. The device for combining cell cores according to claim 9, **characterized in that**:
the sorting module (305) comprises:

a sorting sub-module configured to sort the members in the battery pack population in descending order of the minimum capacity of these members, and obtain the sorting result;
a reserving sub-module configured to use the top Q members in the sorting result as reserved members to be reserved to the next generation battery pack population;
a new member generation sub-module configured to generate new members; and
a battery pack population combination sub-module configured to combine the reserved members and new members into a new battery pack population.

12. The device for combining cell cores according to claim 11, **characterized in that**:
the new member generation sub-module comprises:
a new member generation unit configured to randomly select a member from the reserved members, and generate a new member by exchanging positions of multiple cell cores in the combination of the cell cores of the reserved member.

13. An electronic apparatus, **characterized in that** the electronic apparatus comprises:

a processor,
a memory, and
a computer program stored on the memory and capable of running on the processor, and configured to implement the method for combining cell cores according to any one of claims 1-8 when it is executed by the processor.

14. A computer-readable storage medium, on which a computer program is stored, and the computer program is configured to implement the method for combining cell cores according to any one of claims 1-8 when it is executed by a processor.

**Patentansprüche**

1.  Verfahren zum Kombinieren von Zellkernen, wobei das Verfahren umfasst:

    Erfassen (101) der Kapazität und des Ladezustands von N Zellkernen; und
    Erzeugen (102) einer Batteriepack-Ausgangspopulation für die N Zellkerne entsprechend unterschiedlichen Kombinationen von Zellkernen, wobei die Batteriepack-Population L Elemente umfasst, wobei jedes der Elemente M Batteriepacks umfasst und jeder der Batteriepacks P Module umfasst, wobei jedes der Module K Zellkerne umfasst, $N=M*P*K$;
    **dadurch gekennzeichnet, dass** das Verfahren ferner umfasst:

    wiederholtes Erzeugen (103) einer neuen Batteriepack-Population unter Verwenden eines genetischen Algorithmus entsprechend den folgenden Schritten, bis eine Batteriepack-Population der letzten Generation erhalten ist, die eine vorher festgelegte Bedingung erfüllt;
    Berechnen (104) einer Mindestkapazität sämtlicher Elemente entsprechend der Kapazität und dem Ladezustand von jedem der Zellkerne in der Batteriepack-Population;
    Sortieren (105) der Elemente auf Grundlage der Mindestkapazität der Elemente in der Batteriepack-Population und Erzeugen einer neuen Batteriepack-Population entsprechend Sortierergebnissen, und
    Kombinieren (106) der Zellkerne zu Zielmodulen und Kombinieren der Zielmodule zu einem Zielbatteriepack entsprechend der Kombination der Zellkerne der Zielbatteriepacks in der Batteriepack-Population der letzten Generation.

2.  Verfahren nach Anspruch 1, **dadurch gekennzeichnet, dass** das Berechnen (104) der Mindestkapazität sämtlicher Elemente entsprechend der Kapazität und dem Ladezustand von jedem der Zellkerne in der Batteriepack-Population umfasst:

    Berechnen (204) der Kapazität und des Ladezustands von jedem der Module entsprechend der Kapazität und dem Ladezustand von jedem der Zellkerne in jedem der Module;
    Berechnen (205) der Kapazität und des Ladezustands von jedem Batteriepack entsprechend der Kapazität und dem Ladezustand von jedem der Module in jedem Batteriepack; und
    Definieren (206) der Mindestkapazität des Batteriepacks in jedem der Elemente als Mindestkapazität des entsprechenden Elements.

3.  Verfahren nach Anspruch 2, **dadurch gekennzeichnet, dass** das Sortieren (105) der Elemente auf Grundlage der Mindestkapazität der Elemente in der Batteriepack-Population und das Erzeugen einer neuen Batteriepack-Population entsprechend Sortierergebnissen umfasst:

    Sortieren (207) sämtlicher Elemente in der Batteriepack-Population in absteigender Reihenfolge der Mindestkapazität der Elemente zum Erhalten des Sortierergebnisses;
    Reservieren (208) der obersten Q Elemente in den Sortierergebnissen als reservierte Elemente und Bringen der reservierten Elemente in eine Batteriepack-Population der nächsten Generation;
    Erzeugen neuer Elemente und
    Kombinieren (211) der reservierten Elemente und der neuen Elemente zu einer neuen Batteriepack-Population.

4.  Verfahren nach Anspruch 3, **dadurch gekennzeichnet, dass** das Erzeugen neuer Elemente umfasst:
    willkürliches Auswählen (209) eines Elements aus den reservierten Elementen und Erzeugen der neuen Elemente durch Tauschen der Position von mehreren Zellkernen in der Kombination aus Zellkernen der reservierten Elemente.

5.  Verfahren nach Anspruch 4, **dadurch gekennzeichnet, dass** das Sortieren (105) der Elemente auf Grundlage der Mindestkapazität der Elemente in der Batteriepack-Population ulation und das Erzeugen einer neuen Batteriepack-Population entsprechend Sortierergebnissen ferner umfasst:
    erneutes Erzeugen (210) neuer Elemente, wenn die Kombination aus den Zellkernen der neuen Elemente identisch ist mit der eines beliebigen Elements in den Sortierergebnissen.

6.  Verfahren nach Anspruch 1, **dadurch gekennzeichnet, dass** das Kombinieren (106) der Zellkerne zu Zielmodulen und Kombinieren der Zielmodule zu einem Zielbatteriepack entsprechend der Kombination der Zellkerne der Zielelemente in der Batteriepack-Population der letzten Generation umfasst:

Auswählen (212) des Elements an der ersten Stelle in der Batteriepack-Population der letzten Generation als Zielelement und
Kombinieren der N Zellkerne zu P Zielmodulen und Kombinieren der P Zielmodule zu M Zielbatteriepacks entsprechend der Kombination von Zellkernen des Zielelements.

7. Verfahren nach Anspruch 1, **dadurch gekennzeichnet, dass** das Verfahren ferner umfasst:
Bestimmen der Batteriepack-Population, die, falls eine Anzahl Wiederholungen eine vorher festgelegte Zahl erreicht, als Batteriepack-Population der letzten Generation erhalten wird, die die vorher festgelegte Bedingung erfüllt.

8. Verfahren nach Anspruch 1, **dadurch gekennzeichnet, dass** das Verfahren ferner umfasst:
Bestimmen der Batteriepack-Population, in der der Mindestkapazitätswert des Elements an der ersten Stelle, das durch Wiederholung erhalten wird, einen Zielkapazitätsschwellenwert erreicht, als Batteriepack-Population der letzten Generation, die die vorher festgelegte Bedingung erfüllt.

9. Vorrichtung zum Kombinieren von Zellkernen, umfassend:

ein Erfassungsmodul (301), das so eingerichtet ist, dass es die Kapazität und den Ladezustand von N Zellkernen erfasst; und
ein Erzeugungsmodul (302), das so eingerichtet ist, dass es eine Batteriepack-Ausgangspopulation für N Zellkerne entsprechend unterschiedlichen Kombinationen von Zellkernen erzeugt, wobei die Batteriepack-Population L Elemente umfasst, wobei jedes dieser Elemente M Batteriepacks umfasst, jeder dieser Batteriepacks P Module umfasst, und jedes der Module K Zellkerne umfasst, wobei N=M*P*K;
**dadurch gekennzeichnet, dass** die Vorrichtung ferner umfasst ein Wiederholungsmodul (303), das so eingerichtet ist, dass es eine neue Batteriepack-Population unter Verwendung eines genetischen Algorithmus entsprechend den folgenden Schritten wiederholt erzeugt, bis eine Batteriepack-Population der letzten Generation erhalten ist, die eine vorher festgelegte Bedingung erfüllt;
ein Berechnungsmodul (304), das so eingerichtet ist, dass es die Mindestkapazität jedes Elements entsprechend der Kapazität und dem Ladezustand von jedem der Zellkerne in der Batteriepack-Population berechnet;
ein Sortiermodul (305), das so eingerichtet ist, dass es die Elemente auf Grundlage der Mindestkapazität von jedem der Elemente in der Batteriepack-Population sortiert und eine neue Batteriepack-Population entsprechend Sortierergebnissen erzeugt, und
ein Kombiniermodul (306), das so eingerichtet ist, dass es entsprechend der Kombination der Zellkerne von Zielelementen in der Batteriepack-Population der letzten Generation die Zellkerne zu Zielmodulen kombiniert und die Zielmodule zu einem Zielbatteriepack kombiniert.

10. Vorrichtung zum Kombinieren von Zellkernen nach Anspruch 9, **dadurch gekennzeichnet, dass**:
das Berechnungsmodul (304) umfasst:

ein erstes Teilmodul zur Berechnung, das so eingerichtet ist, dass es entsprechend der Kapazität und dem Ladezustand von jedem der Zellkerne in jedem Modul die Kapazität und den Ladezustand von jedem Modul berechnet;
ein zweites Teilmodul zur Berechnung, das so eingerichtet ist, dass es entsprechend der Kapazität und dem Ladezustand von jedem Modul in jedem Batteriepack die Kapazität und den Ladezustand von jedem Batteriepack berechnet; und
ein drittes Teilmodul zur Berechnung, das so eingerichtet ist, dass es die Mindestkapazität der Batteriepacks in jedem Element als die Mindestkapazität verwendet, die jedem Element entspricht, und
wobei das Sortiermodul (305) so eingerichtet ist, dass es die Elemente in der Batteriepack-Population entsprechend der Mindestkapazität von jedem Element in der Batteriepack-Population sortiert und eine neue Batteriepack-Population entsprechend den Sortierergebnissen erzeugt.

11. Vorrichtung zum Kombinieren von Zellkernen nach Anspruch 9, **dadurch gekennzeichnet, dass**:
das Sortiermodul (305) umfasst:

ein Teilmodul zum Sortieren, das so eingerichtet ist, dass es die Elemente in der Batteriepack-Population in absteigender Reihenfolge der Mindestkapazität dieser Elemente sortiert und das Sortierergebnis erhält;

ein Teilmodul zum Reservieren, das so eingerichtet ist, dass es die obersten Q Elemente in dem Sortierergebnis als reservierte Elemente verwendet, die für die Batteriepack-Population der nächsten Generation reserviert werden sollen;
ein Teilmodul zum Erzeugen neuer Elemente, das so eingerichtet ist, dass es neue Elemente erzeugt, und
ein Teilmodul zum Kombinieren zu einer Batteriepack-Population, das so eingerichtet ist, dass es die reservierten Elemente und neuen Elemente zu einer neuen Batteriepack-Population kombiniert.

**12.** Vorrichtung zum Kombinieren von Zellkernen nach Anspruch 11, **dadurch gekennzeichnet, dass**:
das Teilmodul zum Erzeugen neuer Elemente umfasst:

eine Einheit zum Erzeugen neuer Elemente, die so eingerichtet ist, dass sie willkürlich ein Element aus den reservierten Elementen auswählt und durch Tauschen der Position von mehreren Zellkernen in der Kombination aus den Zellkernen der reservierten Elemente ein neues Element erzeugt.

**13.** Elektronisches Gerät, das **dadurch gekennzeichnet ist, dass** das elektronische Gerät umfasst:

einen Prozessor,
einen Speicher und
ein Computerprogramm, das in dem Speicher gespeichert ist und in der Lage ist, auf dem Prozessor zu laufen, und das so eingerichtet ist, dass es das Verfahren zum Kombinieren von Zellkernen nach einem der Ansprüche 1 bis 8 implementiert, wenn es von dem Prozessor ausgeführt wird.

**14.** Computerlesbares Speichermedium, auf dem ein Computerprogramm gespeichert ist, und wobei das Computerprogramm so eingerichtet ist, dass es das Verfahren zum Kombinieren von Zellkernen nach einem der Ansprüche 1 bis 8 implementiert, wenn es von einem Prozessor ausgeführt wird.

## Revendications

**1.** Procédé destiné à combiner des âmes de cellules, ledit procédé comprenant de :

acquérir (101) des capacités et des états de charge de N âmes de cellule ; et
générer (102) une population de bloc-batteries initiale pour les N âmes de cellule selon différentes combinaisons d'âmes de cellule, la population de bloc-batteries comprenant L éléments, chacun des éléments comprenant M bloc-batteries et chacun des bloc-batteries comprenant P modules, chacun des modules comprenant K âmes de cellule, N=M*P*K ;
**caractérisé en ce que** le procédé comprend en outre :

générer (103) une nouvelle population de bloc-batteries de manière itérative en utilisant un algorithme génétique selon les étapes suivantes jusqu'à ce qu'une population de bloc-batteries de dernière génération qui réponde à une condition prédéfinie soit obtenue ;
calculer (104) la capacité minimale de tous les éléments selon la capacité et l'état de charge de chacun des âmes de cellule dans la population de bloc-batteries ;
trier (105) les éléments sur la base de la capacité minimale des éléments dans la population de bloc-batteries et générer une nouvelle population de bloc-batteries selon des résultats de tri ; et
combiner (106) les âmes de cellule en modules cibles et combiner les modules cibles en un bloc-batterie cible selon la combinaison des âmes de cellule des éléments cibles dans la population de bloc-batteries de dernière génération.

**2.** Procédé selon la revendication 1, **caractérisé en ce que** ledit calcul (104) de la capacité minimale de tous les éléments selon la capacité et l'état de charge de chacun des âmes de cellule dans la population de bloc-batteries comprend de :

calculer (204) la capacité et l'état de charge de chacun des modules selon la capacité et l'état de charge de chacun des âmes de cellule dans chacun des modules ;
calculer (205) la capacité et l'état de charge de chaque bloc-batterie selon la capacité et l'état de charge de chacun des modules dans chaque bloc-batterie ; et de
définir (206) la capacité minimale du bloc-batterie dans chacun des éléments comme la capacité minimale de l'élément correspondant.

**3.** Procédé selon la revendication 2, **caractérisé en ce que** ledit tri (105) des éléments sur la base de la capacité minimale des éléments dans la population de bloc-batteries et la génération d'une nouvelle population de bloc-batteries selon les résultats de tri comprend de :

trier (207) tous les éléments dans la population de bloc-batteries dans l'ordre décroissant de la capacité minimale des éléments afin d'obtenir le résultat de tri ;
réserver (208) Q éléments supérieurs dans les résultats de tri comme des éléments réservés et placer les éléments réservés dans une population de bloc-batteries de génération suivante ;
générer de nouveaux éléments ; et de
combiner (211) les éléments réservés et les nouveaux éléments en une nouvelle population de bloc-batteries.

**4.** Procédé selon la revendication 3, **caractérisé en ce que** ladite génération de nouveaux éléments comprend de :
sélectionner (209) un élément de manière arbitraire à partir des éléments réservés et générer les nouveaux éléments en échangeant des positions d'une pluralité de âmes de cellule dans la combinaison de âmes de cellule des éléments réservés.

**5.** Procédé selon la revendication 4, **caractérisé en ce que** ledit tri (105) des éléments sur la base de la capacité minimale des éléments dans la population de bloc-batteries et la génération d'une nouvelle population de bloc-batteries selon les résultats de tri comprend en outre de :
re-générer (210) de nouveaux éléments lorsque la combinaison d'âmes de cellule des nouveaux éléments est identique à celle d'un élément quelconque dans les résultats de tri.

**6.** Procédé selon la revendication 1, **caractérisé en ce que** ladite combinaison (106) des âmes de cellule en modules cibles et la combinaison des modules cibles en un bloc-batterie cible selon la combinaison des âmes de cellule des éléments cibles dans la population de bloc-batteries de dernière génération comprend de :

sélectionner (212) l'élément de premier rang dans la population de bloc-batteries de dernière génération comme l'élément cible ; et de
combiner les N âmes de cellule en P modules cibles et combiner les P modules cibles en M bloc-batteries cibles selon la combinaison d'âmes de cellule de l'élément cible.

**7.** Procédé selon la revendication 1, **caractérisé en ce que** le procédé comprend en outre de :
déterminer la population de bloc-batteries qui est obtenue dans le cas où le total d'itérations atteint un nombre prédéterminé comme la population de bloc-batteries de dernière génération qui répond à la condition prédéfinie.

**8.** Procédé selon la revendication 1, **caractérisé en ce que** le procédé comprend en outre de :
déterminer la population de bloc-batteries dans laquelle la valeur de capacité minimale de l'élément de premier rang obtenue par itération atteint un seuil de capacité cible comme la population de bloc-batteries de dernière génération qui répond à la condition prédéfinie.

**9.** Dispositif destiné à combiner des âmes de cellule, comprenant :

un module d'acquisition (301) configuré pour acquérir des capacités et des états de charge de N âmes de cellule ; et
un module de génération (302) configuré pour générer une population de bloc-batteries initiale pour N âmes de cellule selon différentes combinaisons d'âmes de cellule, la population de bloc-batteries comprenant L éléments, chacun de ces éléments comprenant M bloc-batteries, chacun de ces bloc-batteries comprenant P modules et chacun des modules comprenant K âmes de cellule, où N=M*P*K ;
**caractérisé en ce que** le dispositif comprend en outre :

un module d'itération (303) configuré pour générer une nouvelle population de bloc-batteries de manière itérative en utilisant un algorithme génétique selon les étapes suivantes jusqu'à ce qu'une population de bloc-batteries de dernière génération qui réponde à une condition prédéfinie soit obtenue ;
un module de calcul (304) configuré pour calculer la capacité minimale de chaque élément selon la capacité et l'état de charge de chacun des âmes de cellule dans la population de bloc-batteries ;
un module de tri (305) configuré pour trier les éléments sur la base de la capacité minimale de chacun des éléments dans la population de bloc-batteries et générer une nouvelle population de bloc-batteries selon les résultats de tri ; et

un module de combinaison (306) configuré pour combiner les âmes de cellule en modules cibles et combiner les modules cibles en un bloc-batterie cible selon la combinaison des âmes de cellule des éléments cibles dans la population de bloc-batteries de dernière génération.

10. Dispositif de combinaison d'âmes de cellule selon la revendication 9, **caractérisé en ce que** :
le module de calcul (304) comprend :

un premier sous-module de calcul configuré pour calculer la capacité et l'état de charge de chaque module selon la capacité et l'état de charge de chacun des âmes de cellule dans chaque module ;
un deuxième sous-module de calcul configuré pour calculer la capacité et l'état de charge de chaque bloc-batterie selon la capacité et l'état de charge de chaque module dans chaque bloc-batterie ; et
un troisième sous-module de calcul configuré pour utiliser la capacité minimale des bloc-batteries dans chaque élément comme la capacité minimale correspondant à chaque élément, et
dans lequel le module de tri (305) est configuré pour trier les éléments dans la population de bloc-batteries selon la capacité minimale de chaque élément dans la population de bloc-batteries, et générer une nouvelle population de bloc-batteries selon le résultat de tri.

11. Dispositif de combinaison d'âmes de cellule selon la revendication 9, **caractérisé en ce que** :
le module de tri (305) comprend :

un sous-module de tri configuré pour trier les éléments dans la population de bloc-batteries dans l'ordre décroissant de la capacité minimale de ces éléments, et obtenir le résultat de tri ;
un sous-module de réservation configuré pour utiliser les Q éléments supérieurs dans le résultat de tri comme éléments réservés à réserver à la population de bloc-batteries de génération suivante ;
un sous-module de génération de nouveaux éléments configuré pour générer des nouveaux éléments ; et
un sous-module de combinaison de populations de bloc-batteries configuré pour combiner les éléments réservés et les nouveaux éléments dans une nouvelle population de bloc-batteries.

12. Dispositif de combinaison d'âmes de cellule selon la revendication 11, **caractérisé en ce que** :
le sous-module de génération de nouveaux éléments comprend :
une unité de génération de nouveaux éléments configurée pour sélectionner de manière aléatoire un élément parmi les éléments réservés, et générer un nouvel élément en échangeant des positions de multiples âmes de cellule dans la combinaison des âmes de cellule de l'élément réservé.

13. Appareil électronique, **caractérisé en ce que** l'appareil électronique comprend :

un processeur,
une mémoire, et
un programme d'ordinateur stocké sur la mémoire et capable de fonctionner sur le processeur, et configuré pour mettre en œuvre le procédé de combinaison d'âmes de cellule selon une quelconque des revendications 1 à 8 lorsqu'il est exécuté par le processeur.

14. Support de stockage lisible par ordinateur, sur lequel un programme d'ordinateur est stocké, et le programme d'ordinateur est configuré pour mettre en œuvre le procédé de combinaison d'âmes de cellule selon une quelconque des revendications 1 à 8 lorsqu'il est exécuté par un processeur.

acquiring capacities and state of charge of N cell cores — 101

generating an initial battery pack population for N cell cores on a basis of different combinations of cell cores — 102

generating a new battery pack population iteratively using a genetic algorithm according to following steps until a last generation battery pack population meeting a preset condition is obtained — 103

calculating minimum capacity of each member according to the capacity and state of charge of all of cell cores in the battery pack population — 104

sorting the members in the battery pack population according to the minimum capacity of these members, and generating a new battery pack population according to the sorting result — 105

combining the cell cores into target modules and combining the target modules into a target battery pack according to combination of the target members in the last generation battery pack population — 106

**FIG. 1**

acquiring capacities and state of charge of N cell cores　201

generating an initial battery pack population for the N cell cores according to different combinations of cell cores　202

generating a new battery pack population iteratively according to following steps using a genetic algorithm until a last generation battery pack population meeting a preset condition is obtained　203

calculating the capacity and state of charge of each module according to the capacity and state of charge of each cell core in each module　204

calculating the capacity and state of charge of each battery pack according to the capacity and state of charge of each module in each battery pack　205

defining the minimum capacity of the battery packs in each member as the minimum capacity of the corresponding member　206

sorting all of members in the battery pack population in descending order of the minimum capacity of these members, and obtaining a sorting result　207

reserving top Q members in the sorting result as reserved members, and putting them into a next generation battery pack population　208

selecting a member arbitrarily from the reserved members, and generate a new member by exchanging positions of a plurality of cell cores in the combination of the cell cores of the reserved member　209

regenerating a new member if the combination of cell cores of the new member is the same as that of any member in the sorting result　210

combining the reserved members and the new member into a new battery pack population　211

defining the first-ranked member of the last generation battery pack population as a target member, and combining N cell cores into P target modules and combining P target modules into M target battery packs depending on the combination of cell cores of the target member　212

turn to

**FIG. 2**

| No | $C_u$(Ah) | $SOC_u$ (%) |
|---|---|---|
| 1 | 126.9537 | 0.7004 |
| 2 | 126.3455 | 0.7067 |
| 3 | 126.2743 | 0.6987 |
| 4 | 125.6052 | 0.7004 |
| 5 | 125.5693 | 0.7001 |
| 6 | 126.0918 | 0.6959 |
| 7 | 126.5610 | 0.7009 |
| 8 | 125.5078 | 0.7042 |
| 9 | 126.1074 | 0.7008 |
| 10 | 125.7516 | 0.7037 |
| ... | ... | ... |
| 9975 | 125.8479 | 0.6931 |
| 9976 | 127.0695 | 0.7028 |
| 9977 | 126.4139 | 0.7005 |
| 9978 | 125.3196 | 0.6985 |
| 9979 | 125.9953 | 0.7000 |
| 9980 | 125.7566 | 0.7016 |
| 9981 | 125.8512 | 0.7043 |
| 9982 | 125.8461 | 0.6996 |
| 9983 | 125.5713 | 0.6980 |
| 9984 | 126.1887 | 0.6959 |

**FIG. 3**

| No. | $C_{min}$ (Ah) | No. | $C_{min}$ (Ah) | No. | $C_{min}$ (Ah) |
|---|---|---|---|---|---|
| 1* | 123.162 | 28 | 123.024 | 55 | 122.958 |
| 2* | 123.152 | 29 | 123.024 | 56 | 122.955 |
| 3* | 123.152 | 30 | 123.024 | 57 | 122.955 |
| 4* | 123.152 | 31 | 123.024 | 58 | 122.955 |
| 5* | 123.119 | 32 | 123.013 | 59 | 122.955 |
| 6* | 123.119 | 33 | 123.009 | 60 | 122.955 |
| 7* | 123.119 | 34 | 123.006 | 61 | 122.955 |
| 8* | 123.072 | 35 | 123.005 | 62 | 122.954 |
| 9* | 123.072 | 36 | 123.005 | 63 | 122.953 |
| 10* | 123.072 | 37 | 123.005 | 64 | 122.947 |
| 11* | 123.072 | 38 | 123.002 | 65 | 122.946 |
| 12* | 123.069 | 39 | 123.002 | 66 | 122.946 |
| 13 | 123.065 | 40 | 123.002 | 67 | 122.940 |
| 14 | 123.056 | 41 | 123.002 | 68 | 122.940 |
| 15 | 123.056 | 42 | 123.000 | 69 | 122.940 |
| 16 | 123.049 | 43 | 122.997 | 70 | 122.940 |
| 17 | 123.036 | 44 | 122.997 | 71 | 122.923 |
| 18 | 123.036 | 45 | 122.997 | 72 | 122.918 |
| 19 | 123.036 | 46 | 122.994 | 73 | 122.912 |
| 20 | 123.034 | 47 | 122.987 | 74 | 122.875 |
| 21 | 123.027 | 48 | 122.982 | 75 | 122.874 |
| 22 | 123.024 | 49 | 122.982 | 76 | 122.873 |
| 23 | 123.024 | 50 | 122.979 | 77 | 122.814 |
| 24 | 123.024 | 51 | 122.976 | 78 | 122.775 |
| 25 | 123.024 | 52 | 122.976 | 79 | 122.769 |
| 26 | 123.024 | 53 | 122.972 | 80 | 122.615 |
| 27 | 123.024 | 54 | 122.970 | / | / |

*: reserved members

**FIG. 4**

acquiring capacities and
state of charge of cell cores

defining a minimum capacity in a
plurality of battery packs as a target
function

assigning serial numbers to the
cell cores

setting optimization
parameters

generating an initial battery pack
population randomly

calculating the minimum
capacity of each member in
the battery pack population

sorting the members on a basis of the
minimum capacity to obtain sorting
results

finishing iterations
and outputting
target members in a
last generation
battery pack
population

Yes ←— the condition for
optimization is met?

turn to

top L*Re members          last L*(1-Re) members

No

reserving the top
L*Re members as
Q reserved
members

selecting any one of
reserved members
randomly and varying it
to form a new member

new population

combining the cell cores in batch into
modules and battery packs respectively
according to combination (serial number)
of the cell cores of the target members

**FIG. 5**

| Battery Pack No. | Battery Pack Capacity (Ah) | Module Capacity (Ah) | | | | | |
|---|---|---|---|---|---|---|---|
| | Module No. | 1 | 2 | 3 | ... | 15 | 16 |
| Battery Pack 1 | 123.65 | 124.82 | 124.51 | 124.88 | ... | 124.67 | 124.77 |
| Battery Pack 2 | 123.66 | 124.53 | 124.45 | 124.52 | ... | 124.76 | 124.33 |
| .... | ... | ... | ... | ... | ... | ... | ... |
| Battery Pack 51 | 123.57 | 124.79 | 124.48 | 124.08 | ... | 125.19 | 123.94 |
| Battery Pack 52 | 123.91 | 124.73 | 124.73 | 124.48 | ... | 125.04 | 124.97 |

**FIG. 6**

| Positions of Cell Cores in Modules | | | 2 | 3 | 4 | 5 | 6 | 7 | 8 | 9 | 10 | 11 | 12 |
|---|---|---|---|---|---|---|---|---|---|---|---|---|---|
| Battery Pack 1 | Module1 | 7733 | 6121 | 5916 | 4251 | 7312 | 1709 | 7262 | 3492 | 9494 | 1595 | 6552 | 9897 |
| | Module2 | 7904 | 4380 | 9071 | 3424 | 892 | 8570 | 5095 | 2565 | 7858 | 2346 | 9343 | 8052 |
| | ... | ... | ... | ... | ... | ... | ... | ... | ... | ... | ... | ... | ... |
| | Module15 | 3896 | 3082 | 9694 | 7298 | 804 | 9172 | 1082 | 8585 | 1481 | 8519 | 2476 | 3674 |
| | Module16 | 2006 | 9233 | 1225 | 1356 | 153 | 7824 | 1682 | 713 | 147 | 9786 | 9015 | 7237 |
| Battery Pack 2 | Module1 | 6120 | 2482 | 7316 | 4516 | 1025 | 6897 | 3980 | 4864 | 4274 | 2491 | 1112 | 932 |
| | Module2 | 2982 | 5496 | 6582 | 1695 | 9277 | 8666 | 6525 | 7633 | 2470 | 9867 | 9829 | 3389 |
| | ... | ... | ... | ... | ... | ... | ... | ... | ... | ... | ... | ... | ... |
| | Module15 | 6878 | 5663 | 9912 | 6941 | 3463 | 7621 | 7452 | 8902 | 625 | 7437 | 3660 | 612 |
| | Module16 | 7928 | 4020 | 5367 | 3067 | 2504 | 9266 | 2913 | 5698 | 8923 | 9237 | 3937 | 4415 |

**FIG. 7**

**FIG. 8**

**FIG. 9**

**FIG. 10**

**FIG. 11**

**FIG. 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 114156552 A


**Non-patent literature cited in the description**

- A cell sorting Algorithm for series-parallel configured Lithium ion battery packs in spacecrafts. **ANADA S et al.** 2020 IEEE INTERNATIONAL CONFERENCE ON POWER ELECTRONICS, DRIVES AND ENERGY SYSTEMS (PEDES). IEEE, 16 December 2020, 1-5